(19) Europäisches Patentamt

European Patent Office

Office européen des brevets

(11) **EP 1 061 330 A1**

(12) **EUROPEAN PATENT APPLICATION**
published in accordance with Art. 158(3) EPC

(43) Date of publication:
20.12.2000 Bulletin 2000/51

(51) Int. Cl.⁷: **G01B 11/00**, G01N 21/956,
H05K 3/34, G06T 7/00

(21) Application number: 99973118.5

(22) Date of filing: 30.11.1999

(86) International application number:
PCT/JP99/06699

(87) International publication number:
WO 00/33023 (08.06.2000 Gazette 2000/23)

(84) Designated Contracting States:
DE

(30) Priority: 30.11.1998 JP 33933598

(71) Applicant:
Olympus Optical Co., Ltd.
Tokyo 151-0072 (JP)

(72) Inventors:
• WATANABE, Nobuyuki
Kohoku-ku, Yokohama-shi, Kanagawa 223-00
(JP)
• MINAMI, Takeshi
Hachioji-shi, Tokyo 192-0045 (JP)

(74) Representative: Kuhnen & Wacker
Patentanwaltsgesellschaft mbH,
Alois-Steinecker-Strasse 22
85354 Freising (DE)

(54) **FLAW DETECTOR**

(57) A defect detecting device detects a defective position concerning to-be-inspected objects, using a plurality of (in the description, first and second) image measuring means. The first (second) image measuring means includes a first (second) defect determining means 55 (58) for inspecting each of the to-be-inspected objects arranged under a predetermined rule at least in one direction, and a first (second) table creating section 56 (59) for storing the state of each inspected object in relation to ID information indicating the position of each inspected object. Integrated determination means 60 makes the inspection results of the first and second image measuring means correspond to each other on the basis of the ID information that indicates the position of any inspected one of the to-be-inspected objects, thereby synthetically determining a defect.

FIG. 16

## Description

Technical Field

This invention relates to a defect detecting device.

Background Art

A defect detecting device is known as prior art, which is adapted to detect, for example, to-be-inspected solder bumps (hereinafter referred to simply as "bumps") formed on a board.

In a defect detecting device as above, a defect is detected by, for example, comparing inspection information obtained by actual measurement, with prestored design information, or by comparing an actually counted number of bumps with a set value, as is disclosed in Japanese Patent Application KOKAI Publication No. 8-203972.

There is another conventional defect detecting device, in which a sensor for measuring two-dimensional information and a sensor for measuring three-dimensional information are provided in different stations, and defect detection is executed on the basis of two-dimensional shape information and three-dimensional shape information.

However, when in the above-mentioned conventional defect detecting devices, the inspection information obtained by actual measurement is compared with prestored design information, it is necessary to register, in advance, the position of each bump or the number of bumps included in the design data. This means that it is necessary to have accurate information concerning the resolution or angle of a camera, or a distortion in a lens.

Moreover, when executing inspection using a two-dimensional information measuring sensor and a three-dimensional information measuring sensor provided in different stations, it is necessary to correct and calibrate the pixel positions of the sensors and make their pixel information items correspond to each other, in order to make the positional information items of the sensors accurately correspond to each other.

Disclosure of Invention

The present invention has been developed in light of the above problems, and aims to provide a defect detecting device capable of accurate detection of defects without pre-registering the position of each to-be-detected object or the number of to-be-detected objects.

To solve the problems and attain the aim, the following devices are provided:

According to claim 1, there is provided a defect detecting device for executing measurements using a plurality of image measuring means to detect a defective position concerning to-be-inspected objects, comprising: inspecting means for inspecting each of to-be-inspected objects arranged under a predetermine rule at least in one direction; and storing means for storing a state of any inspected one of the to-be-inspected objects in relation to ID information that indicates the position of the any inspected one, characterized by comprising determination means for making inspection results, obtained from the plurality of image measuring means, correspond to each other on the basis of the ID information that indicates the position of the any inspected one of the to-be-inspected objects, thereby synthetically determining a defect.

According to claim 2, in the defect detecting device of claim 1, each of the plurality of image measuring means has inspecting means and the determination means, and further has classification means for classifying the to-be-inspected objects in accordance with states of the to-be-inspected objects, the state of each of the to-be-inspected objects being stored in relation to ID information that indicates the position of the each of the to-be-inspected objects.

According to claim 3, in the defect detecting device of claim 1, the plurality of image measuring means include respective optical systems which have a common objective lens.

According to claim 4, the defect detecting device of claim 3 further comprises separating means for separating reflected light having passed through the common objective lens, on the basis of respective bands of light sources, the separated reflected light beams being guided to respective detecting sections of the plurality of image measuring means.

According to claim 5, there is provided a defect detecting device for detecting a defective position concerning a plurality of to-be-inspected objects arranged under a predetermined rule in column and row directions, characterized by comprising: search means for searching the plurality of to-be-inspected objects by a predetermined method; and detecting means for creating imaginary lattice lines on the basis of a reference line connecting those two selected from the searched to-be-inspected objects, which are separated from each other by a predetermined distance, and also on the basis of a design value concerning a distance between each pair of adjacent to-be-inspected objects, thereby detecting a defective position on the basis of whether or not a to-be-inspected object exists on each intersection of the lattice lines.

According to claim 6, there is provided a defect detecting device for detecting a defective position concerning a plurality of to-be-inspected objects arranged under a predetermined rule in column and row directions, characterized by comprising: search means for searching the plurality of to-be-inspected objects by a predetermined method; and detecting means for creating imaginary lattice lines on the basis of a reference line connecting those two selected from the searched to-be-inspected objects, which are separated from each other by a predetermined distance, and also on the basis of a design value concerning that distance between each pair of adjacent to-be-inspected objects, which is obtained by dividing a length of the reference line by a value obtained by subtracting 1 from the number of bumps existing on the reference line, thereby detecting a defective position on the basis of whether or not a to-be-inspected object exists on each intersection of the lattice lines.

According to claim 7, there is provided a defect detecting device for detecting a defective position concerning a plurality of to-be-inspected objects arranged under a predetermined rule in column and row directions, characterized by comprising: search means for searching the plurality of to-be-inspected objects by a predetermined method; and detecting means for creating imaginary lattice lines on the basis of a reference line connecting those two selected from the searched to-be-inspected objects, which are separated from each other by a predetermined distance, and also on the basis of a design value concerning a distance between each pair of neighbouring to-be-inspected objects, thereby replacing position coordinates of each of the to-be-inspected objects with row and column numbers of that intersection of the lattice lines, which is closest to a position with the position coordinates, and detecting a defective position on the basis of whether or not a to-be-inspected object exists at the intersection with the row and column numbers.

According to claim 8, in any one of claims 5, 6 and 7, the plurality of to-be-inspected objects are arranged in a checker board pattern, and different imaginary lattice lines are created for odd columns and rows and for even columns and rows, thereby detecting a defective position.

According to claim 9, in any one of claims 5, 6 and 7, the plurality of to-be-inspected objects are arranged in a checker board pattern, and each intersection of the lattice lines detected by the detecting means consists of each intersection of each odd row and each odd column (or each even column), or consists of each intersection of each even row and each even column (or each odd column).

Brief Description of Drawings

FIG. 1 is a schematic view showing a to-be-inspected surface 10 possess an array of bumps 11 photographed by a camera from right above;
FIG. 2 is a block diagram showing a bump defect detecting device to which a first embodiment of the invention is applied;
FIG. 3 is a view showing the position coordinates of each bump 11;
FIG. 4 is a view useful in explaining a procedure for searching, on the basis of the position coordinates $P_A$ of a reference bump A, a bump that is adjacent to the bump A and is included in a search area of a sector form indicated in hatch pattern;
FIG. 5 is a flow chart for explaining a procedure for obtaining bumps C and D in FIG. 6;
FIG. 6 is a view useful in explaining a procedure for obtaining a straight line CD connecting the bumps C and D, and obtaining a distance d between the position coordinates P of each bump and the straight line CD;
flow chart
FIG. 7 is a flow chart indicating a procedure for obtaining the number M; the rows of the array of bumps, and the row index of each bump;
FIG. 8 is a view useful in explaining a first method for calculating a defective position;
FIG. 9 is a view useful in explaining a second method for calculating a defective position;
FIG. 10 is a flow chart illustrating a procedure for estimating bump positions included in the design data;
FIG. 11 is a flow chart illustrating a procedure for determining a defective position;
FIG. 12 is a view showing a modification of the first embodiment, in which bumps are arranged in a checker board pattern;
FIG. 13 is a view useful in explaining a first method for determining a bump defective position in the checker board pattern;
FIG. 14 is a view useful in explaining a second method for determining a bump defective position in the checker board pattern;
FIG. 15 is a view showing a modification of the checker board pattern;
FIG. 16 is a block diagram illustrating a measuring system obtained by combining two-dimensional measuring means and three-dimensional measuring means;
FIG. 17 is a view showing the structure of the measuring system of FIG. 16;
FIG. 18 is a block diagram illustrating a bump defect detecting device to which a third embodiment of the invention is applied;

FIG. 19 is a view useful in explaining a classifying method used in the third embodiment;

FIG. 20 is a view illustrating a state in which bumps are classified in accordance with their degrees of defectiveness;

FIG. 21 is a flow chart useful in briefly explaining a procedure for determining whether or not each bump is defective, according to the third embodiment;

FIG. 22 is a schematic view illustrating an arrangement of solder bumps as to-be-inspected objects in a fourth embodiment;

FIG. 23 is a flow chart useful in explaining the operation of the fourth embodiment; and

FIG. 24 is a view illustrating ID information that indicates each bump position.

Best Mode for Carrying Out the Invention

The embodiments of the invention will be described in detail with reference to the accompanying drawings.

(First Embodiment)

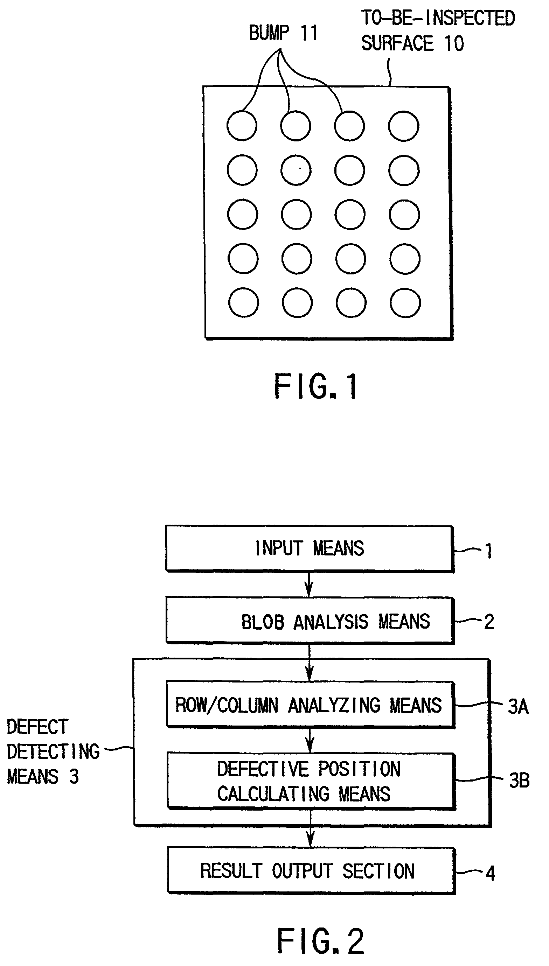

(First,) A first embodiment of the invention will be described. FIG. 1 is a schematic view showing a to-be-inspected surface 10 with a plurality of bump 11 photographed by a camera from right above. To-be-inspected bumps are regularly arranged in rows and columns on the to-be-inspected surface 10.

FIG. 2 is a block diagram showing a bump defect detecting device to which the first embodiment of the invention is applied. An image as shown in FIG. 1, obtained by photographing the to-be-inspected surface 10 by input means 1 such as a camera, is transferred to blob analysis means 2. The blob analysis means 2 obtains the coordinates of the center-of-gravity of each bump 11, or the coordinates of the center of the circumscribed rectangle of each bump 11, which will be generically referred to as "position coordinates". The characterizing amounts of the bumps 11, such as the area of each bump 11, the length of each side of the circumscribed rectangle, the average diameter of the bumps, etc., may be obtained in addition to the coordinates.

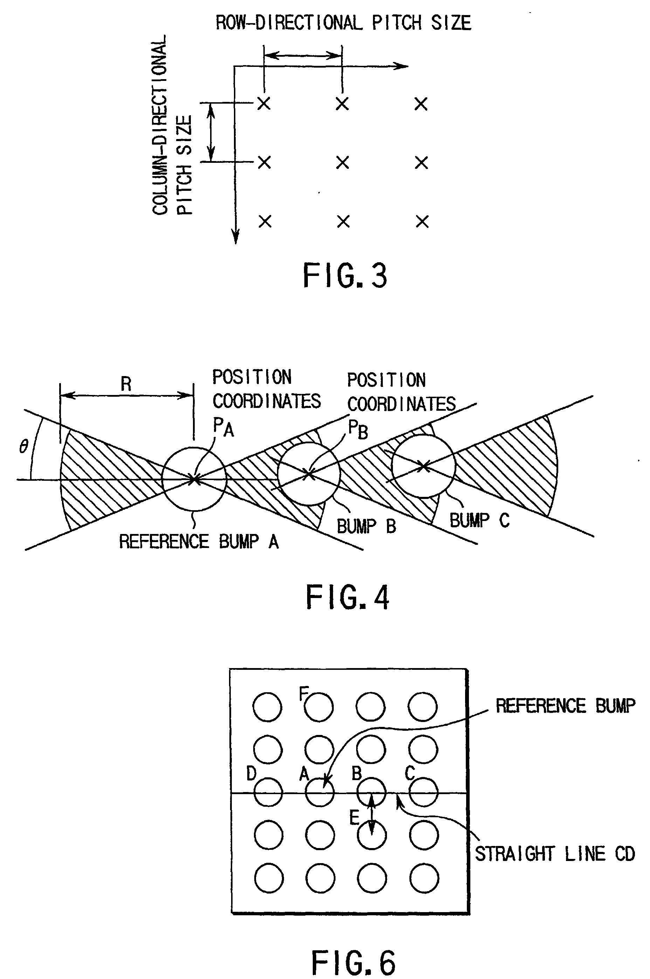

FIG. 3 is a view showing the position coordinates (the position indicated by X) of each bump 11. The distance between each pair of adjacent position coordinates is called a pitch size or a lattice constant. In this embodiment, data concerning the column-directional pitch size and the row-directional pitch size is registered in storage means (not shown).

Data concerning the position coordinates obtained by the blob analysis means 2 is transferred to defect detecting means 3. The defect detecting means 3 executes defect determination on the basis of the data obtained by the blob analysis means 2 and the pitch size of the bumps. Specifically, row/column number analyzing means 3A incorporated in the defect detecting means 3 obtains, on the basis of position coordinates of each bump 11, the number M of rows and the number N of columns of the bumps 11 arranged on the to-be-inspected surface 10, and also row and column numbers that indicate the row and the column in which each bump 11 is situated.

The obtained number M of rows and number N of columns of the bumps 11, and the obtained row and column numbers of each bump 11 are transferred to defective position calculating means 3B, which, in turn, detects a defective position, for example, a bump missing position, on the basis of the transferred information. A result output section 4 outputs information concerning the detected defective position.

The principle of the above-described defect detecting means 3 will be described in detail. First reference will be given of the row/column number analyzing means 3A incorporated in the defect detecting means 3. To obtain the number M; the rows of the array of bumps 11 and the row index of each bump 11, and the number N of the columns of the array of bumps 11 and the column index of each bump 11, at first, a single reference bump is selected from bumps having their position coordinates detected by the blob analysis means 2, thereby executing analysis on the basis of the selected bump and row-directional and column-directional pitch sizes registered in advance in a storage (not shown).

A method for obtaining the number M; the rows array and a row index will now be described. At first, a bump is searched, which is neighbouring to a reference bump A and included in a search area of a sector form (the hatched area in FIG. 4) having a radius R from the position coordinates $P_A$ and an angle $\theta$ between one side of the sector and the horizontal line, as is shown in FIG. 4. The angle $\theta$ is, for example, 5 - 10 degrees. As a result of this searching operation, a bump B (with position coordinates PB) is obtained. Suppose that the radius R is larger at least than the pre-registered row-directional pitch sizes; for example 1.5 to 2.0 times.

Subsequently, a new search area is set, using the searched bump B as a reference bump. This operation is repeated until no more bumps are detected, and the last detected bump is set to be a bump C.

Although in the case of FIG. 4, searching is executed rightward, the same searching operation is also executed leftward, thereby setting the last detected bump at a bump D.

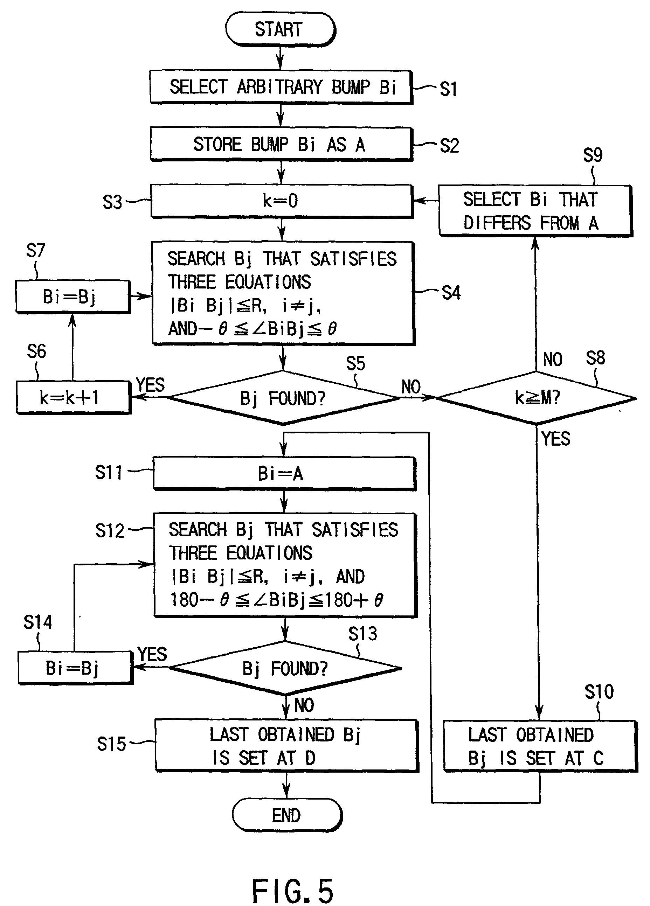

FIG. 5 is a flow chart illustrating a procedure for obtaining the bumps C and D. Suppose that the bumps having their position coordinates determined by the blob analysis means 2 are represented by $B_1, B_2, ..., B_i, ..., B_n$, the dis-

tance between each pair $B_i$ and Bj of adjacent bumps is represented by $|B_i Bj|$, and the line connecting these bumps is represented by $B_i$ Bj. Further, suppose that the angle between a vector $B_i$ Bj and the X-axis is represented by $\angle B_iBj$.

A description will be first given of the case of executing a rightward searching operation, beginning from a reference bump. Any optional bump $B_i$ is selected (step S1) and stored as A ($A = B_i$) (step S2). Subsequently, 0 is input to a counter k (step S3), and then, $B_i$ that satisfies three equations $|B_i Bj| \leqq R$ (R: the radius of the search area), $i \neq j$, and $-\theta \leqq \angle B_iBj \leqq \theta$ is searched from j = 1 to n (step S4). Then, it is determined whether or not Bj exits (step S5). If the answer is YES, k is incremented (step S6), and after that, the searched Bj is used as a new $B_i$ (step S7), the program returning to the step S4. If the answer at the step S5 is No, it is determined whether or not $k \geqq M$ (M: a predetermined number of searching operations) is satisfied (step S8). If the answer is NO, a bump $B_i$ different from A is newly set (step S9), and the program returns to the step S3. If, on the other hand, the answer at the step S8 is YES, the last obtained Bj is set at the bump C (step S10).

When executing a leftward search, beginning from the reference bump, A is substituted for $B_i$ (step S11), and Bj that satisfies three equations $|B_i Bj| \leqq R$, $i \neq j$, and $180 - \theta \leqq \angle B_iBj \leqq 180 + \theta$ is searched from j = 1 to n (step S12). Then, it is determined whether or not Bj exits (step S13). If the answer is YES, the searched $B_i$ is substituted for Bj (step S14), and the program returns to the step S12.

If the answer at the step S13 is NO, the last obtained Bj is set at the bump D (step S15), followed by the termination of the present process.

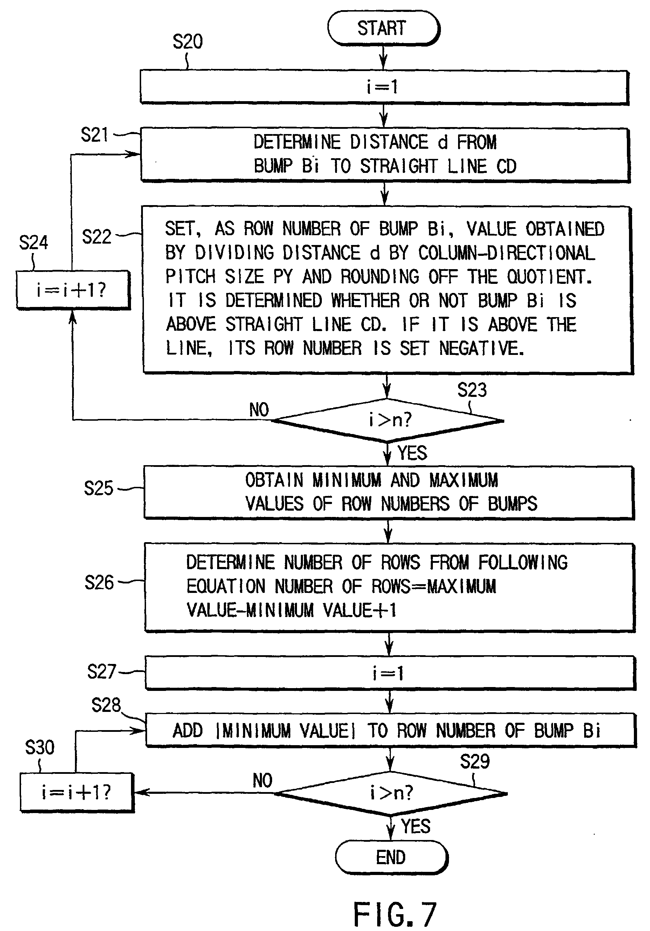

After the bumps C and D are determined as described above, a line CD passing through the position coordinates $P_C$ and $P_D$ as shown in FIG. 6 is obtained. FIG. 6 shows the reference bump A, and the both ends bumps C and D searched in the leftward direction and rightward direction, and the line CD. After determining the line CD, the distance d between the position coordinates P of each bump and the line CD is given by

$$d = \frac{|ax + by + c|}{\sqrt{a^2 + b^2}}$$

where a, b and c represent coefficients used in the following equation indicating the line CD:

$$ax + by + c = 0$$

After that, the ratio of obtained distance *d* and the column directional pitch size is calculated, and the truncated integer value is the index of the row of the array. For example, since in FIG. 6, the distance from the position coordinates of a bump E to the line CD is substantially equal to the column-directional pitch size, the row number of the bump E is 1. For a bump located above the line CD, the index changed to a negative obtained by multiplying the calculated row index by -1. For example, in the case of a bump F, the distance to the line CD is about twice the column-directional pitch size, and is located above the line CD, and hence the to-be-obtained row index is -2. The row index of a negative value can be set more than 0 by obtaining the row numbers of all bumps, calculating the minimum value of the row numbers, and adding the absolute value of the minimum value to the row indices of each bump.

Further, the number M of rows of all bumps can be easily obtained from the following equation, if the maximum value MAX and the minimum value MIN of the row numbers of all bumps are calculated:

$$\text{The number M of rows} = \text{MAX} - \text{MIN} + 1$$

FIG. 7 is a flow chart illustrating a procedure for obtaining the number M; the rows of array of the bumps and the row index of each bump. First, 1 is substituted for a counter value i (step S20), thereby determining the distance d from the bump $B_i$ to the line CD (step S21). Subsequently, the determined distance d is divided by a column-directional pitch size PY, and its quotient is rounded off. The resultant value is used as the row number of the bump $B_i$. It is determined whether or not the bump $B_i$ is located above the line CD. If it exists above the line, the row index is set to negative (step S22). Then, it is determined whether or not i > n is satisfied (step S23). If the answer is NO, i is incremented (step S24), whereby the program returns to the step S21.

If, on the other hand, the answer at the step S23 is YES, the minimum value and the maximum value of the obtained row numbers of all bumps are calculated (step S25). After that, the number of rows is obtained from the number of rows = maximum value - minimum value + 1 (step S26). Then, 1 is substituted for i (step S27), and |minimum value| is added to the row number of the obtained bump $B_i$ (step S28). |•| represents the absolute value. This operation makes the row number of the bump $B_i$ positive.

Subsequently, the condition i > n is examined (step S29). If the answer is NO, i is incremented (step S30), and then the program returns to the step S28. If the answer is YES, the present process is terminated.

By the above-described method, the number M; the row number of bump(s) array and the row index of each bump can be obtained. Since the same method can be used to obtain the number N; the column number of bump(s) array and the column index of each bump, no description will be given thereof.

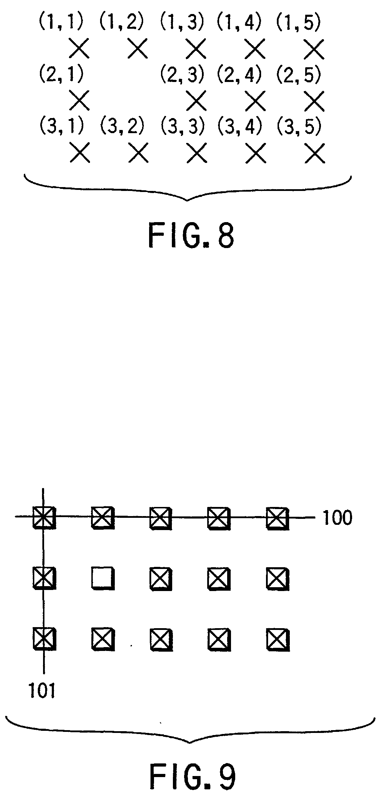

The defective position calculating means 3B incorporated in the defect detecting means 3 will be described. There are two defective position calculating methods as follows: A first method will be described with reference to FIG. 8, while a second method will be described with reference to FIG. 9. In FIGS. 8 and 9, each position marked with X indicates the actually measured position coordinates of the corresponding bump. Further, in FIG. 8, a pair of numbers in parentheses indicate the row number and the column number. For example, (1, 2) indicates that the row number is 1 and the column number is 2. In FIG. 9, □ indicates an estimated bump position included in the design data.

The first method determines the state (good/defective) of positions from the degree of continuity of the row and column numbers. For example, suppose that bumps are arranged in three rows and five columns as shown in FIG. 8. To detect a defective position, at first, a bump with (1, 1) indicating the first row and the first column is searched. If it exists, the state of the position is determined to be good, whereas if it does not exist, the state of the position is determined to be defective. By comparing the actually measured coordinate index and the reference continuous matrix index, it is determined the existance of the bump in array.

Since in the case of FIG. 8, there is no bump with the row and column numbers (2, 2), it is determined that the state of the position of the second row and the second column is defective. The position coordinates of this defect can be calculated, on the basis of the row and column numbers of the bump lacking position, by adding integer multiples of the row-directional and column-directional pitch sizes to the position coordinates (1, 1) indicating the bump located in the first row and the first column.

The advantage of the first method is that it does not require registration or estimation of each bump position included in the design data, and hence enables high-speed calculation of a defective position

In the second method, each bump position included in the design data is estimated, and a bump detected near each bump position included in the estimated design data is searched, thereby determining whether or not the bump exists and determining a bump state (good/defective). When estimating a bump position included in the design data, at first, an upper left bump position is estimated. As is shown in FIG. 9, the upper left bump can be estimated by calculating an intersection between two straight lines --a straight line 100 that passes through those two of bumps in the first row, which separate by a pre-registered distance D or more, and a straight line 101 that passes through those two of bumps in the first row, which separate by a pre-registered distance D' or more.

Thereafter, the position separated rightward from the estimated upper left bump position by the row-directional pitch size along the straight line 100 is estimated as a bump position of the first row and the second column. This searching operation is repeated N times (N: the number of columns), thereby estimating the bump positions of the first row included in the design data. Concerning the second row, the position separated from the upper left bump position by the column-directional pitch size along the straight line 101 is determined a bump position of the second row and the first column. The bump positions of the second row are estimated in the same manner as in the first row. The above operations are repeated to estimate all bump positions of the number M of rows and the number N of columns.

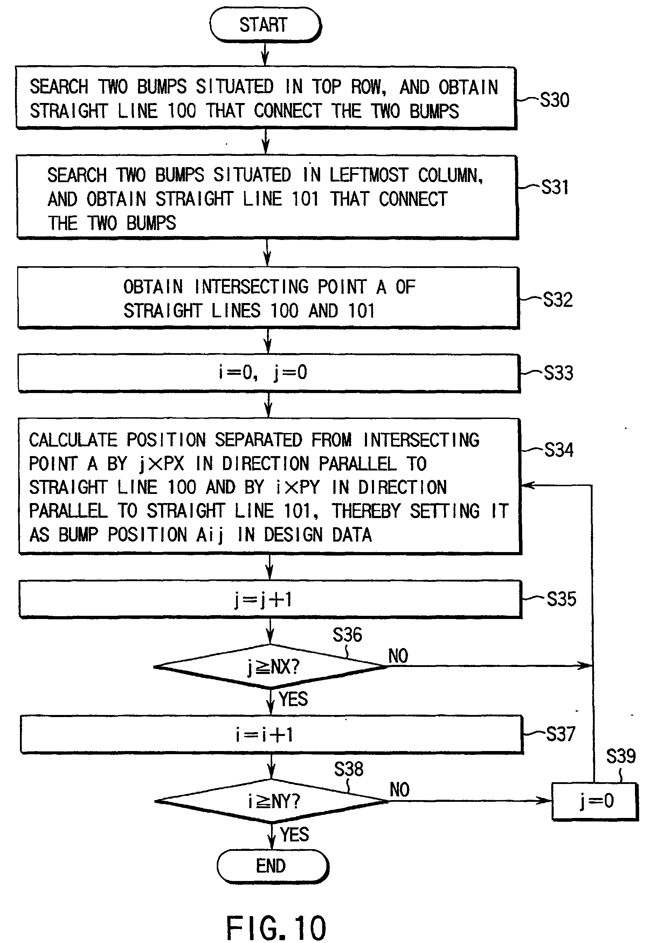

FIG. 10 is a flow chart illustrating a procedure for estimating bump positions included in the design data. First, two bumps located in the uppermost row are searched, thereby obtaining the straight line 100 connecting the two bumps (step S30). Similarly, two bumps located the leftmost column are searched, thereby obtaining the straight line 101 (step S31). After that, an intersection A between the obtained straight lines 100 and 101 is obtained (step S32).

Then, 0 is substituted for counter values i and j (step S33), whereby a bump position $A_{ij}$ included in the design data is obtained, which is separated from the intersection A by $(j \times PX)$ in a direction parallel to the straight line 100, and also by $(i \times PY)$ in a direction parallel to the straight line 101 (step S34). PX represents the column-directional pitch size, and the PY the row-directional pitch size. Further, i and j out of $A_{ij}$ represent row and column index, respectively.

Subsequently, j is incremented (step S35), thereby determining whether or not $j \geqq NX$ is satisfied (step S36). If the answer is NO, the program returns to the step S34. NX represents the number of columns obtained by the row/column number analyzing means 3A. Then, i is incremented (step S37), and it is determined whether or not $i \geqq NY$ is satisfied (step S38). If the answer is NO, 0 is substituted for j (step S39), thereby returning to the step S34. NY represents the number of rows obtained by the row/column number analyzing means 3A. Further, if the answer at the step S38 is YES, the present process is terminated.

Alternatively, the straight line 100 (or 101) may be obtained by searching all bumps in the first row (or in the first column), and obtaining a least square line based on the position coordinates of all the bumps.

Since in the above method, each bump position included in the design data can be estimated on the basis of the column-directional and row-directional pitch sizes, referring to the intersection of the two straight lines, a designed bump position can be accurately estimated even when the upper left ends bump is missing or even when it is not included in the design data. Moreover if the designed array data is differ from the filled regular lattice pattern. The row and column indices of any bump lacking position is registered in advance in the defect detecting means. In accordance with the first and second embodiments, the regular lattice pattern is estimated from a measured image, and no determination is executed for previously lacking row or column number.

Thereafter, determination as to a defective position is executed. The defective position is detected by searching a bump actually detected in the vicinity of the position coordinates of each bump as the estimated design data, and determining to be defective so as to indicate a defective position, if such a bump does not exist. The coordinates of the defective position are used as bump position coordinates included in the estimated design data.

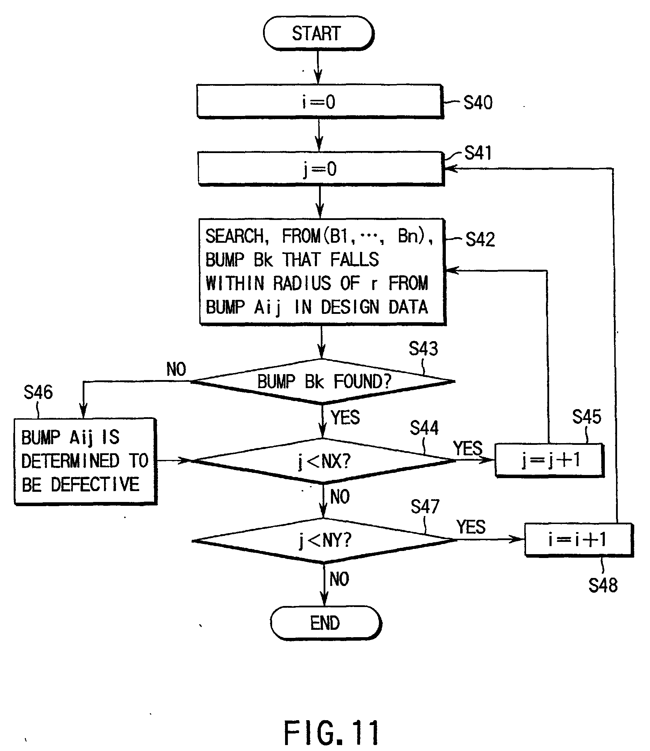

FIG. 11 is a flow chart illustrating a procedure for determining a defective position. First, 0 is substituted for counter values i and j (steps S40 and S41). Then, a bump $B_k$ existing within an area of a radius r (r is smaller than the column-directional or row-directional pitch size) from a bump $A_{ij}$ included in the design data is searched from ($B_1$, $B_2$, ..., $B_n$) (step S42). Subsequently, it is determined whether or not the bump $B_k$ is found (step S43). If the answer is NO, the position of the bump $A_{ij}$ is determined a defective position (step S46), followed by the program proceeding to a step S44. If the answer at the step S43 is YES, the program directly proceeds to a step S44.

At the step S44, the condition j < NX is examined, and if the answer is YES, j is incremented (step S45), followed by the program returning to the step S42. If, on the other hand, the answer at the step S44 is NO, it is determined whether or not i < NY is satisfied (step S47). If the answer is YES, i is incremented (step S48), followed by the program returning to the step S41. If the answer at the step S47 is NO, the present process is terminated.

Data on the determined defective position is stored in storage means (not shown) together with row and column indices.

The second means estimates each bump position as design data, and searches a corresponding bump actually detected near the estimated position. Accordingly, even if an error is made when calculating the row and column numbers of each bump, a defective position can be accurately determined unless the position of the upper left bump and the straight lines 100 and 101 are wrongly determined.

In the above-described first embodiment, a bump missing or defective position can be determined only from the position coordinates of actually detected bumps and a pre-registered column-directional or row-directional pitch size. Therefore, defect detection can be executed very accurately without pre-registering bump positions or the number of all bumps included in the design data.

In addition, when comparing the inspection results obtained by plurality of inspection device (or equipment), it is necessary to match, in some way, the coordinates used in both cases. However, accurate comparison can be executed without such matching procedure if row and column numbers depicted in above are used.

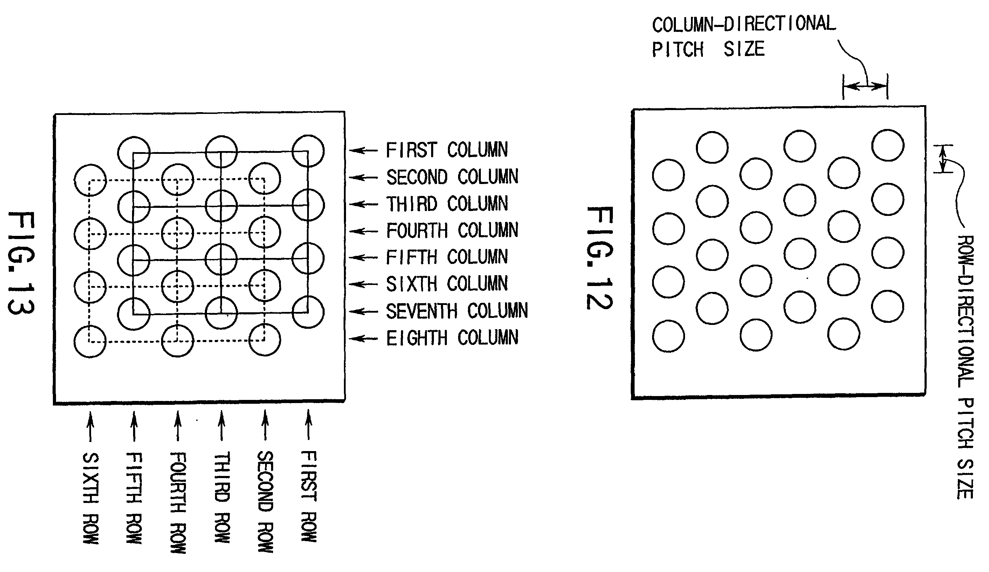

A description will be given of a modification of the first embodiment. Although in the above description, bumps are supposed to be arranged in a regular lattice pattern as shown in FIG. 1, there is a case where bumps are arranged in a checker board pattern as shown in FIG. 12. When determining a defective bump position in such a checker board pattern, the following two methods can be used.

In a first method, as shown in FIG. 13, a lattice frame (indicated by the solid lines in FIG. 13) is formed by connecting, with straight lines, bumps arranged in odd rows and odd columns, and another lattice frame (indicated by the broken lines in FIG. 13) is formed by connecting, with straight lines, bumps arranged in even rows and even columns, thereby estimating lattice positions from the intersections of each lattice frame.

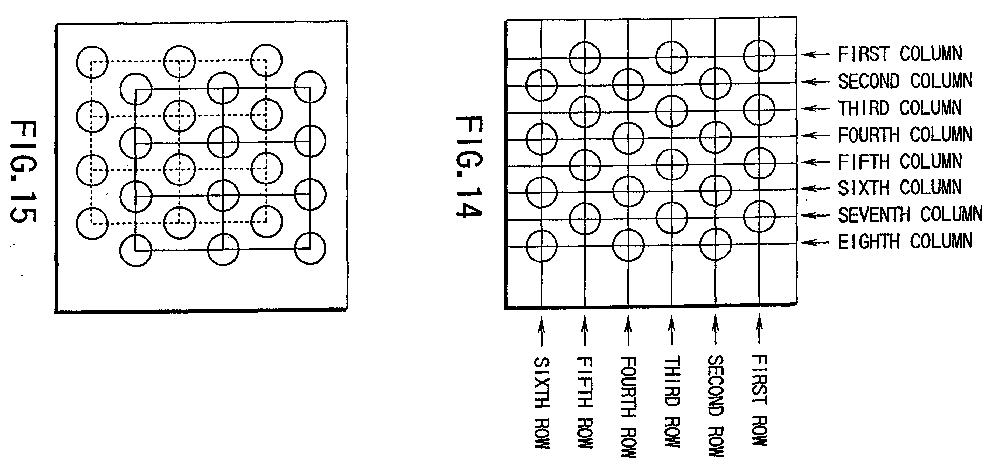

In a second method, as shown in FIG. 14, a lattice frame is formed by connecting bumps arranged in each row and each column. When estimating a lattice position in an odd row, only intersections in an odd column are obtained, while when estimating a lattice position in an even row, only intersections in an even column are obtained. Further, even when bumps are arranged as shown in FIG. 15 (even when there is no bump at the upper left corner), each lattice position can be estimated from lattice frames obtained the odd rows and even columns, and even rows and odd columns.

(Second Embodiment)

A second embodiment of the invention will be described. Although the first embodiment premises that an accurate column-directional or row-directional pitch size is pre-registered, accurate column-directional and row-directional pitch sizes can be obtained using the row/column number analyzing means 3A, even if they are not predetermined. Specifically, the row/column number analyzing means 3A obtains a straight line CD in the same manner as in the first embodiment. At this time, the radius R of a sector form as shown in FIG. 4 is arbitrary given independently from the pitch sizes. Subsequently, the average distance between bumps C and D is obtained by dividing the distance by a value, which is obtained by subtracting one from the number of bumps existing between the bumps C and D. This average distance is used as the row-directional pitch size. The column-directional pitch size can be obtained in a similar manner.

After determining the row-directional and column-directional pitch sizes, the number of rows, each row index, the number of columns and each column index can be determined in the same manner as in the first embodiment.

The above-described second embodiment is free from the bother of pre-registering an accurate pitch size for each to-be-inspected object, and hence can deal with many types of to-be-inspected objects within an allowable range determined by a single set value (the set radius R of a sector form as shown in FIG. 4). Moreover, since the embodiment is free from variations in pitch size between different photographing systems, it can deal with many types of photographing systems within an allowable range determined by a set value.

(Third Embodiment)

A third embodiment of the invention will be described. A bump defect detecting device according to the third embodiment is applied to a measuring system which comprises a combination of two-dimensional measuring means (two-dimensional shape measuring means) and three-dimensional measuring means (three-dimensional shape measuring means), and detects a defective bump position as a result of Integrated determination of the measurement results of these measuring means.

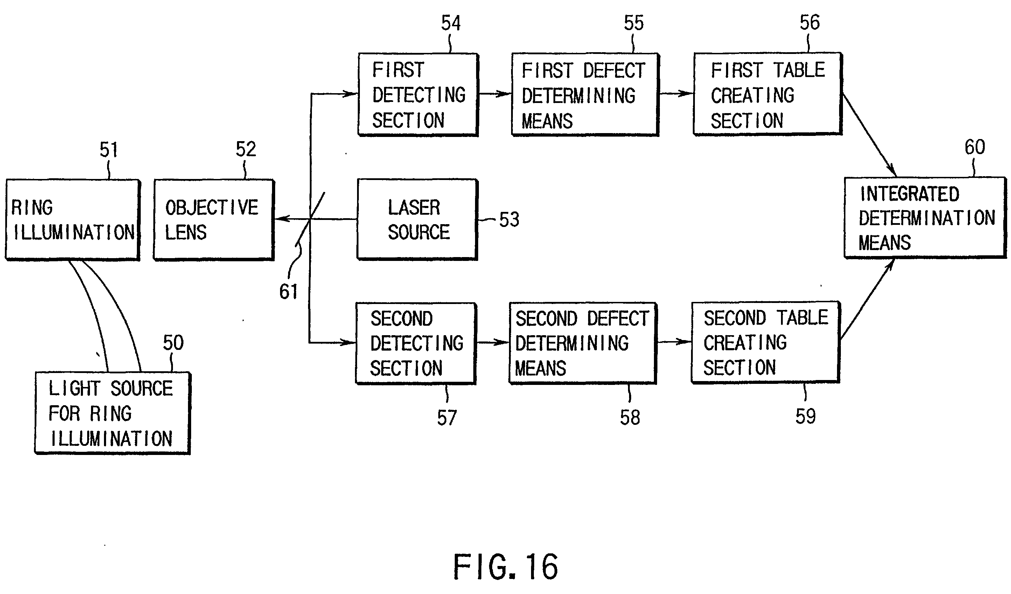

First, the measuring system of this embodiment will be described. FIG. 16 is a functional block diagram showing the measuring system. It comprises, as optical systems, a light source 50 for ring illumination, a ring illumination lamp 51, an objective lens 52, a laser source 53, a dichroic mirror 61 as wavelength separating means, etc. These optical systems will be described later in detail.

The two-dimensional measuring means is means for obtaining a reflection image formed of diffusing light, which is projected onto a sample (in this embodiment, an array of bump) in all circumferential directions at a tilt angle substantially parallel to the surface of the sample, and is reflected therefrom. This reflection image is detected by a first detecting section 54. First defect determining means 55 determines a defect position from the feature of the shape of the reflection image. A first table creating section 56 creates a table concerning a defective bump position, on the basis of estimation of a lattice as described in the first and second embodiments.

The three-dimensional measuring means is means for scanning a sample, such as a board provided with bumps, an electronic component, etc., with, for example, using a laser beam, and based on the principle of triangular surveying, thereby obtaining data concerning the intensity distribution of light reflected from the sample and the height of the sample. This data is detected by a second detecting section 57. Second defect detecting means 58 determines a defect on the basis of the height and reflected-light intensity data. A second table creating section 59 creates a table concerning a defective bump position, on the basis of estimation of a lattice as described in the first and second embodiments. Integrated determination means 60 executes Integrated determination of a defect by comparing combining a defective bump position information created by the first table creating section 56 with a defective bump information position created by the second table creating section 59.

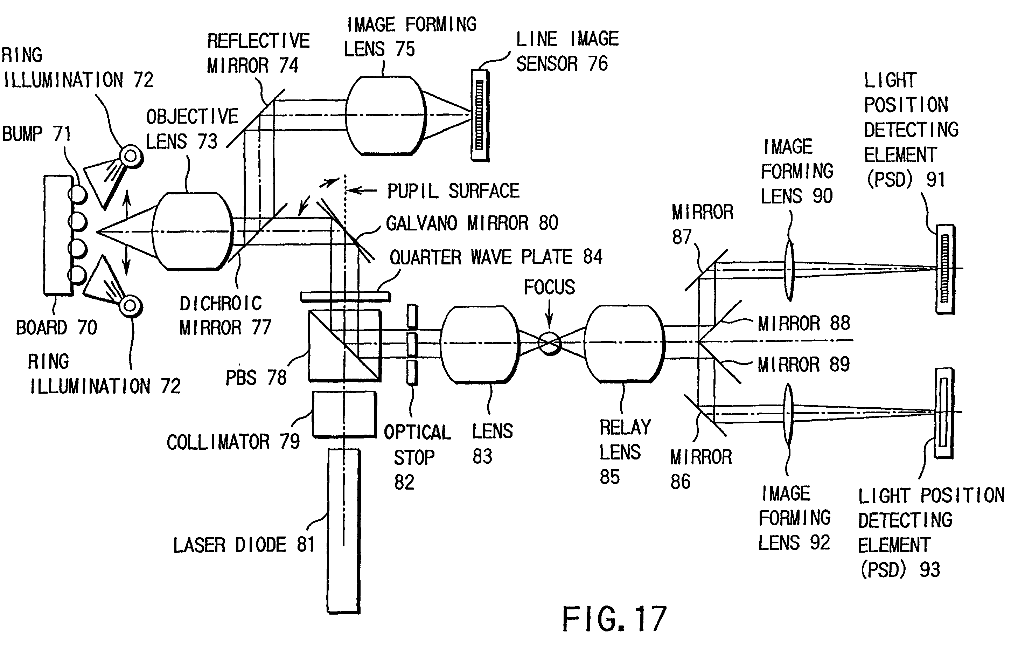

FIG. 17 is a view showing, in more detail, the structures of the optical systems appearing in FIG. 16. In FIG. 17, to-be-inspected bumps 71 are provided on a board 70. In this state, the bumps 71 are illuminated with a ring illumination lamp 72. At the same time, measuring light from a laser diode 81 is converted into parallel light by a collimator 79, passed through a polarizing beam splitter (PBS) 78 and a quarter wave plate 84, reflected from a galvano mirror 80, passed through a dichroic mirror 77, converted by an objective lens 73 into converged light with an NA determined from the pupil diameter and focal distance of the objective lens 73, and projected onto any desired portion of the board 70 surface provided with the bumps 71.

Light reflected from each bump 71 is passed through the objective lens 73, and subjected by the dichroic mirror 77 to wavelength separation. One component of the separated light is reflected to a reflective mirror 74, and converged by an image forming lens 75 onto a line image sensor 76 (which corresponds to the first detecting section 54 in FIG. 16).

The other component of the light passing trough the dichroic mirror 77 is reflected by the galvano mirror 80, passed through the quarter wave plate 84, reflected by the PBS 78, restricted by a optical stop 82, and converged by a lens 83 onto a focal plane. The light passing through the lens 83 passes through a release lens 85 designed as an infinite system, and reflects from each of a pair of mirrors 88 and 89 arranged at a predetermined angle. The light reflecting from the mirror 88 further reflects from a mirror 87, passes through an image forming lens 90 and converges onto a light position detecting element (PSD) 91 (which corresponds to the second detecting section 57 in FIG. 16). Similarly, the light reflecting from the mirror 89 further reflects from a mirror 86, passes through an image forming lens 92 and converges onto another light position sensitive detector (PSD) 93.

In the above-described structure, the optical path extending from the objective lens 73 to the line image sensor 76 via the dichroic mirror 77, the reflective mirror 74, the image forming lens 75 constitutes the optical system of two-dimensional measuring means. Further, the optical path extending from the objective lens 73 to the PSDs 91 and 93 via the dichroic mirror 77, the galvano mirror 80, the quarter wave plate 84, the PBS 78 and the lens stop 82 constitutes the optical system of three-dimensional measuring means.

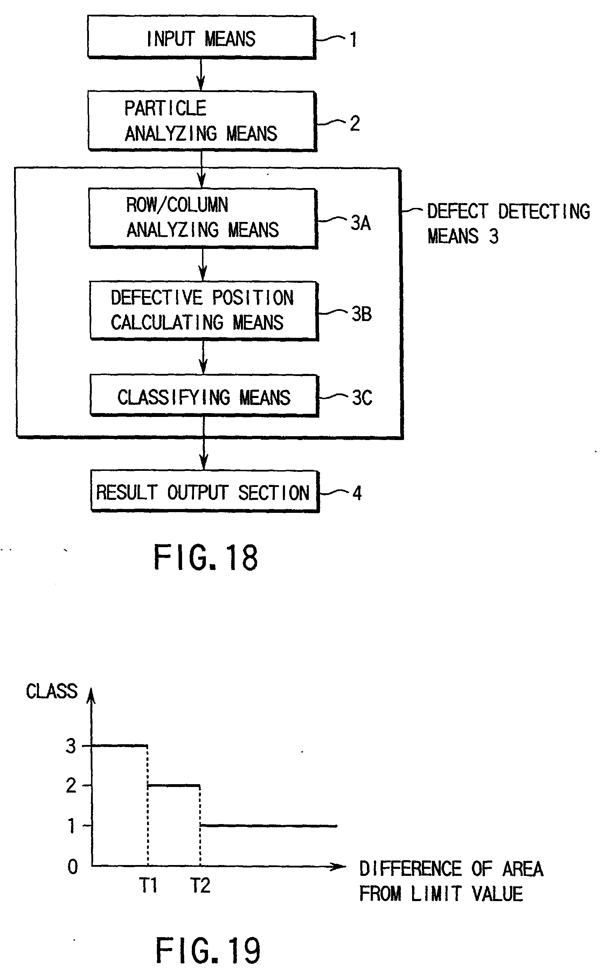

FIG. 18 is a block diagram illustrating a bump defect detecting device according to a third embodiment of the invention. The block diagram of FIG. 18 is obtained by adding classification means 3C to the block diagram of FIG. 2.

When in FIG. 18, data in a three-dimensional shape is input from input means 1, the height distribution and brightness distribution of an object are transferred as two-dimensional image data items to the blob analysis means 2. The blob analysis means 2 obtains, as the position coordinates of each bump, the coordinates of the center-of-gravity of each bump or the center of the circumscribed rectangle of each bump. The blob analysis means may be arranged to obtain a characterizing amount of each bump, such as the area, density information (or distribution information concerning, for example, the height of each bump), the length of each side of the circumscribed rectangle, the average diameter, etc. The position coordinate data obtained by the blob analysis means 2 is transferred to the defect detecting means 3.

The defect detecting means 3 executes defect determination on the basis of the supplied data. It obtains information as to in which row and column of each sample with bumps arranged thereon, a defective bump exists, by estimating a lattice arrangement of bumps as a result of actual measurement using the method employed in the first or second embodiment.

Specifically, the row/column number analyzing means 3A incorporated in the defect detecting means 3 obtains, from the position coordinates of each bump, the number M of rows and the number N of columns of bumps provided on a to-be-inspected surface, and further the row/column index of each bump, which indicates in which row and column each bump is situated. The obtained numbers of rows and columns and the row/column index of each bump are transferred to the defective position calculating means 3B, where a defective bump position is calculated.

The classification means 3C compares one or some of the characterizing amounts of each bump determined good by the defective position calculating means 3B, such as the area, the length of each side of the circumscribed rectangle, the average diameter, etc., with a limit value for each pre-registered characterizing amount for a good bump. If the characterizing amount of each bump is lower or higher than the limit value of a good bump, each bump is determined defective, and each defective bump is classified depending upon the difference from the limit value.

The classification means 3C will be described in more detail, using the area of each bump as an index for classification. In this section, defective bumps are classified into class 0 to class n. Suppose that the larger the class number, the closer to a good bump the defective bump. First, a position, determined by the defective position calculating means 3B that no bump exists, is classified as class 0 indicating a most defective position. Then, the bump is determined to be defective, the characterizing amount (the area, the length of each side of the circumscribed rectangle, the average diameter, etc.) of which is smaller or larger than a pre-registered limit value for a bump considered to be good.

At this time, each bump is classified on the basis of the difference from the limit value. For example, when determining, whether each bump is good or defective, on the basis of its area, a bump is determined to be a defective one belonging to class 3 if the difference of its characterizing amount from the limit value is higher than 0 and not more than $T1$, to be a defective one belonging to class 2 if the difference is higher than $T1$ and not more than $T2$, and to be a defective one belonging to class 1 if the difference is higher than $T2$, as is shown in FIG. 19. Thus, classification of defects can be realized. $T1$ and $T2$ in FIG. 19 are pre-registered threshold values.

Since in the above-described third embodiment, each defect is classified and output, more accurate defect determination can be executed on the basis of defect class information, when comparing the output results with inspection results obtained by inspecting the same to-be-inspected objects using another inspecting device.

On the other hand, in the case of measuring a height, the average value of the heights of bumps is calculated and used as an index, or the state of the object surface is determined by the least square method, thereby executing classification similar to the above on the basis of the difference of each bump height therefrom.

A description will now be given of a method for synthesizing defect classification information obtained by two measuring devices as shown in FIG. 16, thereby enabling classification into a larger number of classes. Bumps are classified into classes such as: class A-1 (the height of a bump significantly differs from that of any other bump); class A-2 (the height of a bump moderately differs from that of any other bump); A-3 (the height of a bump slightly differs from that of any other bump); A-4 (the shape of a reflection image of a bump peak portion is abnormal); A-5 (the height and the area of a reflection image fall within respective normal ranges); etc. Then, it is recorded in which row and column of an estimated lattice each of bumps classified into these classes is situated. As a recording medium, a memory, a hard disk, a magneto-optic disk, a magnetic disk, etc. is used.

When data on a two-dimensional shape is input through the input means 1, image data concerning the two-dimensional shape is transferred to the blob analysis means 22. The blob analysis means 22 determines a defect in the shape on the basis of the area, radius, etc. of the bump image obtained by binarization based on brightness data included in the image data. In a manner similar to the above-described three-dimensional measurement, bumps are classified into classes, based on the degrees of defectiveness, such as: B-1 (no bump exists); B-2 (the area is smaller than the average area of all bumps); B-3 (the area of the bump image falls within a normal range); etc.

Also, at this time, a lattice is estimated from the arrangement of the actually measured bumps, and it is recorded in which positions in the lattice the classified bumps are situated, as in the first or second embodiment. Since the defect determination results obtained by measuring the three-dimensional and two-dimensional shapes are stored with reference to positions in the estimated lattice, information items, concerning a defect in the shape of the same bump and obtained by different photographing systems, can be compared with each other without being influenced by differences between the systems in resolution, angle, aspect ratio, astigmatismus, etc. or by the degree of curvature in image.

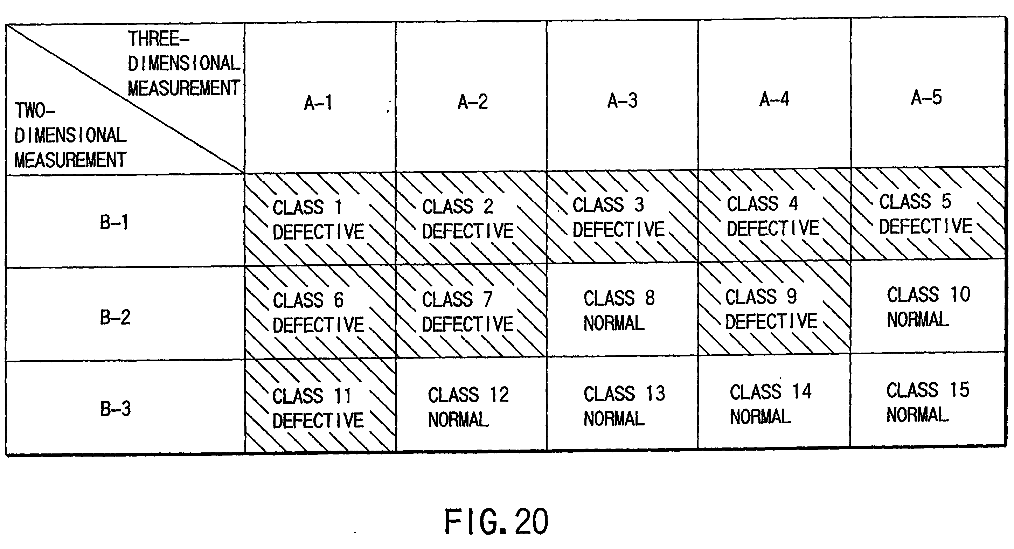

The bumps classified into the aforementioned classes A-1, A-2, A-3, A-4, A-5, B-1, B-2 and B-3 are further grouped into, for example, fifteen classes as shown in FIG. 20. After that, integrated determination is executed on the basis of preset reference values, thereby finally classifying the bumps into defective ones and normal ones.

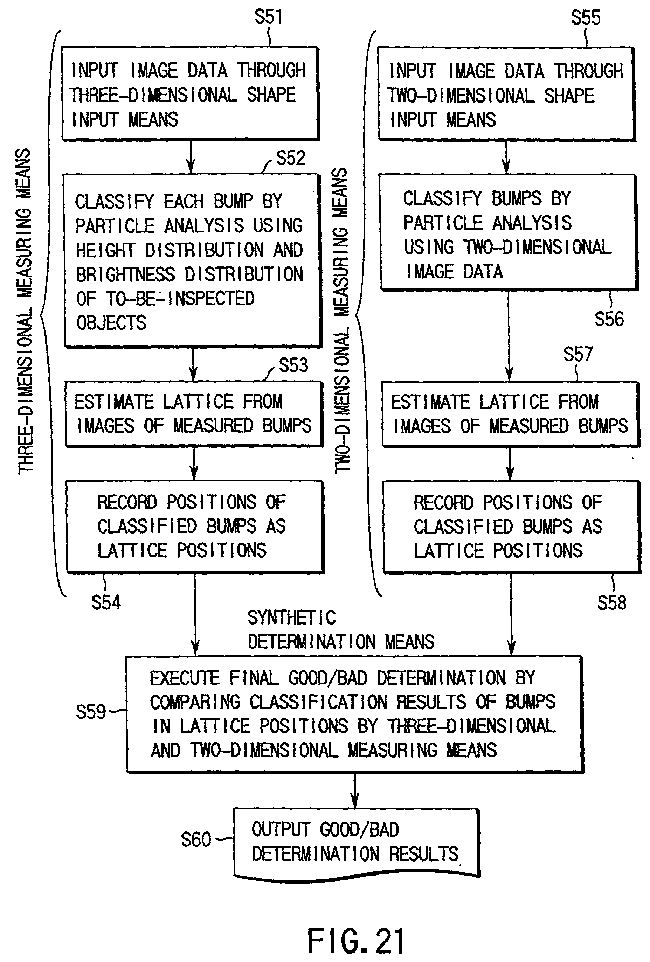

FIG. 21 is a flow chart useful in briefly explaining a procedure for determining whether or not each bump is defective, according to the above-described third embodiment. First, three-dimensionally measuring means will be described. Image data on to-be-inspected objects is input through three-dimensional shape input means (step S51). Subsequently, each bump is classified by the blob analysis method on the basis of the height distribution and the brightness distribution of the to-be-inspected objects (step S52). Then, a lattice is estimated from an image of the measured bumps (step S53). After that, the positions of the classified bumps are recorded as positions in the lattice (step S54).

Two-dimensional measuring means will be described. First, image data as two-dimensional shape data is input through the two-dimensional measuring means (step S55). Subsequently, the bumps are classified by the blob analysis method on the basis of the two-dimensional image data (step S56). Then, a lattice is estimated from an image of the measured bumps (step S57). After that, the positions of the classified bumps are recorded as positions in the lattice (step S58).

Finally, integrated determination means executes final good/bad determination by comparing how each obtained bump in a corresponding lattice position is classified by particle analysis of the three-dimensionally and two-dimensionally measuring means (step S59), thereby outputting good/bad determination results (step S60).

(Fourth Embodiment)

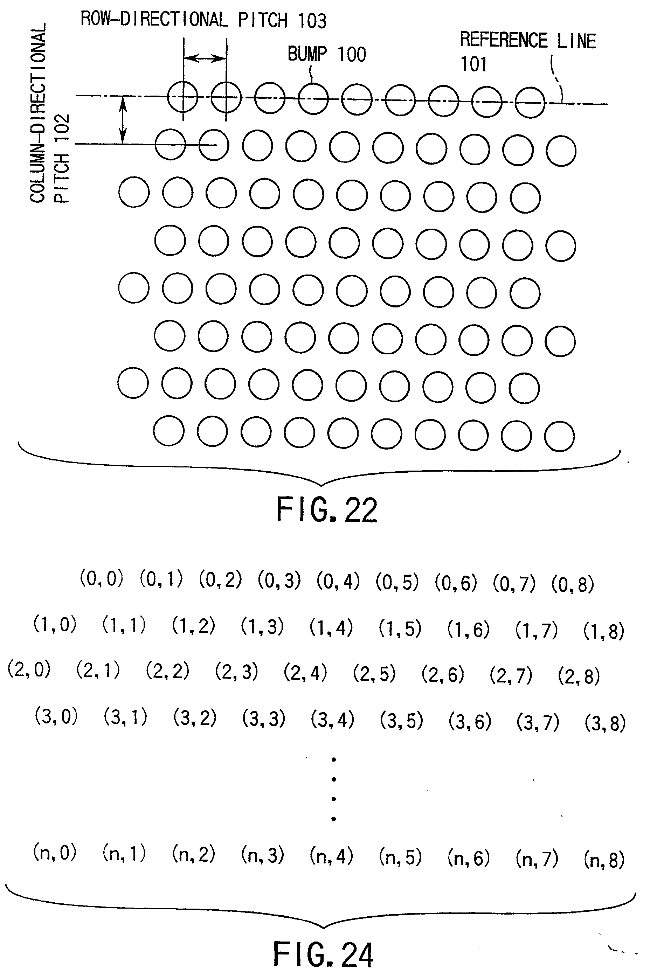

A fourth embodiment of the invention will now be described. The fourth embodiment is characterized in that ID information, which indicates the position of each of to-be-inspected objects (bumps) arranged regularly at least in one direction, is calculated by means similar to that illustrated in FIGS. 4 and 5. FIG. 22 schematically shows the arrangement of bumps 100 as such to-be-inspected objects. Although bumps 100 are arranged in line in the row direction with a predetermined row-directional pitch 103, they are arranged irregularly in the column direction with a predetermined pitch 102. The structure of this embodiment is similar to that of the third embodiment (see FIG. 16).

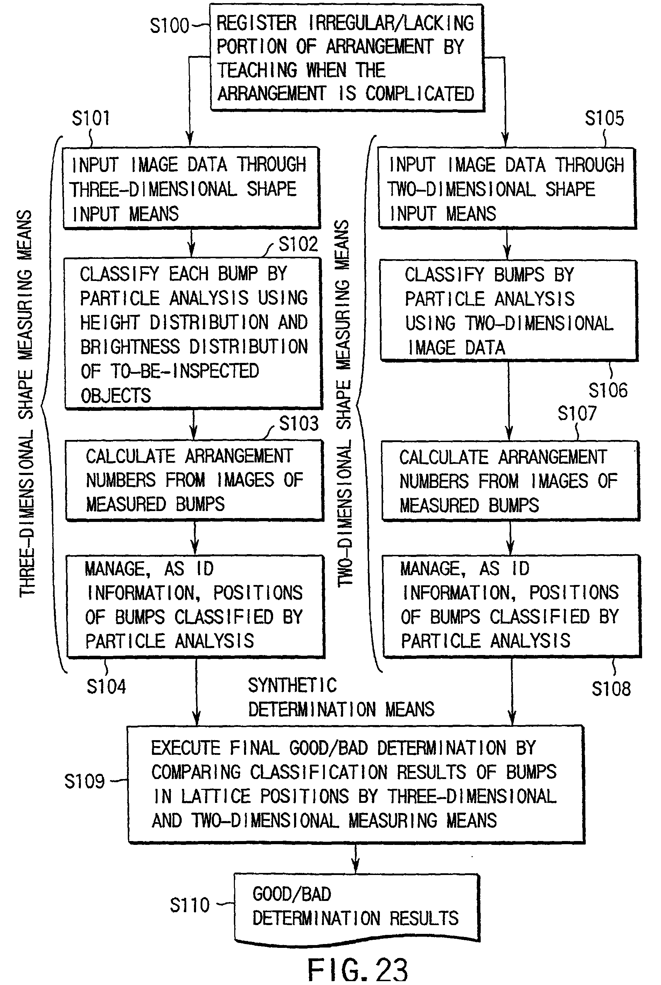

FIG. 23 is a flow chart useful in explaining the operation of the fourth embodiment. Referring to FIG. 23, the operation of this embodiment will be described. Image data concerning a sample such as a board, an electronic components, etc., on which bumps are provided in an arrangement as shown in FIG. 22, is obtained and input by a laser scan method using means (three-dimensional measuring means) for obtaining the height of the sample and the intensity distribution of light reflected therefrom on the basis of the principle of triangular surveying, and also using means (two-dimensional measuring means) for projecting diffusion light onto the to-be-inspected objects in all directions substantially parallel to the surface of the sample, and obtaining a reflection image (steps S101 and S105).

After that, blob analysis means at least obtains the coordinates of the center of gravity of each bump, or the center position of a rectangle circumscribing each bump (the coordinates of both positions will hereinafter be referred to as "position coordinates"). The analyzing means also obtains the characterizing amount of each bump, such as the length of each side of the circumscribed rectangle, the average diameter, etc. Using these data items and the blob analysis method, the bumps are classified (steps S102 and S106). Data obtained by the blob analysis means is transferred to defect detecting means, thereby executing defect determination based on the data.

At first, the arrangement numbers of the to-be-inspected objects are calculated by means shown in FIGS. 4 and 5 (steps S103 and S107). In the case of the to-be-inspected objects shown in FIG. 22, a horizontal reference line 101 is obtained, and the column-directional distance of each bump 100 from the reference line 101 is calculated using the following equation, which was also used in the first embodiment:

$$d = \frac{|ax + by + c|}{\sqrt{a^2 + b^2}}$$

On the basis of the preset column-directional pitch 102, it is determined by calculation to which row each bump 100 belongs. Subsequently, the column-directional position of each bump 100 belonging to a corresponding row is calculated. It is determined by calculation in which row and column each bump 100 is situated, and the calculation result is used as ID information indicating its position (FIG. 24). The above-described characterizing amount of each bump obtained by the blob analysis means is managed in relation to its ID information (steps S104 and S108).

The method of using data and the method of good/bad determination based on comparison of measurement results obtained by a plurality of measuring means, which are used in the following process, are the same as employed in the third embodiment (steps S109 and S110).

When to-be-inspected objects are arranged in a complicated manner, and additional information is necessary because, for example, when there are irregular/lacking bump positions, it is sufficient to register, before inputting image data, the bump positions by arrangement calculating means using a method such as teaching (a process for pre-registering defective bump positions by, for example, measuring a standard sample) (step S100).

Industrial Applicability

As described above, in the present invention, image data concerning to-be-inspected objects measured is used to create an ideal lattice and ideal lattice intervals estimated from the position coordinates of each measured object. By virtue of this, defects can be detected highly accurately without pre-registering design data concerning the position of each to-be-inspected object or the number of all to-be-inspected objects. Furthermore, even if cameras have different resolutions, aspect ratio or lens distortions or are used at different angles, an ideal lattice for each measuring system can be created instantly. In addition, where two-dimensional information and three-dimensional information are obtained by different sensors, even if the sensors have different pixel resolutions, aspect ratio inclinations or image surface distortions, their image analysis results can be compared with each other or made to correspond to each other, without correcting or calibrating the different characteristics, directly using position information concerning a lattice estimated from the positions of measured objects. As a result, integration of information on, for example, a defect in to-be-inspected objects can be provided.

**Claims**

1. A defect detecting device for executing measurements using a plurality of image measuring means to detect a defective position concerning to-be-inspected objects, each of the plurality of image measuring means comprising:

   inspecting means for inspecting each of to-be-inspected objects arranged under a predetermined rule at least in one direction; and
   storing means for storing a state of any inspected one of the to-be-inspected objects in relation to ID information that indicates the position of said any inspected one,
   characterized by comprising determination means for making inspection results, obtained from the plurality of image measuring means, correspond to each other on the basis of the ID information that indicates the position of said any inspected one of the to-be-inspected objects, thereby synthetically determining a defect.

2. The defect detecting device according to claim 1, characterized in that each of the plurality of image measuring means has inspecting means and the determination means, and further has classification means for classifying the to-be-inspected objects in accordance with states of the to-be-inspected objects, the state of each of the to-be-inspected objects being stored in relation to ID information that indicates the position of said each of the to-be-inspected objects.

3. The defect detecting device according to claim 1, characterized in that the plurality of image measuring means include respective optical systems which have a common objective lens provided in relation to the to-be-inspected objects.

4. The defect detecting device according to claim 3, characterized by further comprising separating means for separating reflected light having passed through the common objective lens, on the basis of respective bands of light sources, the separated reflected light beams being guided to respective detecting sections of the plurality of image measuring means.

5. A defect detecting device for detecting a defective position concerning a plurality of to-be-inspected objects arranged under a predetermined rule in column and row directions, characterized by comprising:

   search means for searching the plurality of to-be-inspected objects by a predetermined method; and
   detecting means for creating imaginary lattice lines on the basis of a reference line connecting those two selected from the searched plurality of to-be-inspected objects, which are separated from each other by a predetermined distance, and also on the basis of a design value concerning a distance between each pair of adjacent to-be-inspected objects, thereby detecting a defective position on the basis of whether or not a to-be-inspected object exists on each intersection of the imaginary lattice lines.

6. A defect detecting device for detecting a defective position concerning a plurality of to-be-inspected objects arranged under a predetermined rule in column and row directions, characterized by comprising:

search means for searching the plurality of to-be-inspected objects by a predetermined method; and
detecting means for creating imaginary lattice lines on the basis of a reference line connecting those two selected from the searched plurality of to-be-inspected objects, which are separated front each other by a predetermined distance, and also on the basis of a distance between each pair of adjacent to-be-inspected objects, which is obtained by dividing a length of the reference line by a value obtained by subtracting 1 from the number of bumps existing on the reference lines, thereby detecting a defective position on the basis of whether or not a to-be-inspected object exists on each intersection of the lattice lines.

7. A defect detecting device for detecting a defective position concerning a plurality of to-be-inspected objects arranged under a predetermined rule in column and row directions, characterized by comprising:

search means for searching the plurality of to-be-inspected objects by a predetermined method; and
detecting means for creating imaginary lattice lines on the basis of a reference line connecting those two selected from the searched plurality of to-be-inspected objects, which are separated from each other by a predetermined distance, and also on the basis of a design value concerning a distance between each pair of neighboring to-be-inspected objects, thereby replacing position coordinates of each of the to-be-inspected objects with row and column numbers of that intersection of the lattice lines, which is closest to a position with the position coordinates, and detecting a defective position on the basis of whether or not a to-be-inspected object exists at the intersection with the row and column indices.

8. The defect detecting device according to any one of claims 5, 6 and 7, characterized in that the plurality of to-be-inspected objects are arranged in a checker board pattern, and different imaginary lattice lines are created for odd columns and rows and for even columns and rows, thereby detecting a defective position.

9. The defect detecting device according to any one of claims 5, 6 and 7, characterized in that the plurality of to-be-inspected objects are arranged in a checker board pattern, and each intersection of the lattice lines detected by the detecting means consists of each intersection of each odd row and each odd column or each even column, or consists of each intersection of each even row and each even column or each odd column.

BUMP 11

TO-BE-INSPECTED
SURFACE 10

FIG. 1

INPUT MEANS — 1

BLOB ANALYSIS MEANS — 2

ROW/COLUMN ANALYZING MEANS — 3A

DEFECT
DETECTING
MEANS 3

DEFECTIVE POSITION
CALCULATING MEANS — 3B

RESULT OUTPUT SECTION — 4

FIG. 2

ROW-DIRECTIONAL PITCH SIZE

FIG. 3

FIG. 4

FIG. 6

START

SELECT ARBITRARY BUMP Bi ─ S1

STORE BUMP Bi AS A ─ S2

S3 ─ k=0 ← SELECT Bi THAT DIFFERS FROM A ─ S9

S7
Bi=Bj → SEARCH Bj THAT SATISFIES THREE EQUATIONS $|Bi\ Bj| \leqq R,\ i \neq j,$ AND $-\theta \leqq \angle BiBj \leqq \theta$ ─ S4

S6
k=k+1 ←YES Bj FOUND? ─ S5 NO → k≧M? ─ S8 NO

S11 ─ Bi=A

S12 ─ SEARCH Bj THAT SATISFIES THREE EQUATIONS $|Bi\ Bj| \leqq R,\ i \neq j,$ AND $180-\theta \leqq \angle BiBj \leqq 180+\theta$

S14
Bi=Bj ←YES Bj FOUND? ─ S13 NO

S15 ─ LAST OBTAINED Bj IS SET AT D

S10 ─ LAST OBTAINED Bj IS SET AT C (YES)

END

FIG.5

START

S20

i=1

S21 — DETERMINE DISTANCE d FROM
BUMP Bi TO STRAIGHT LINE CD

S24

i=i+1?

S22 — SET, AS ROW NUMBER OF BUMP Bi, VALUE OBTAINED
BY DIVIDING DISTANCE d BY COLUMN-DIRECTIONAL
PITCH SIZE PY AND ROUNDING OFF THE QUOTIENT.
IT IS DETERMINED WHETHER OR NOT BUMP Bi IS
ABOVE STRAIGHT LINE CD. IF IT IS ABOVE THE
LINE, ITS ROW NUMBER IS SET NEGATIVE.

NO    i>n?    S23

YES

S25 — OBTAIN MINIMUM AND MAXIMUM
VALUES OF ROW NUMBERS OF BUMPS

S26 — DETERMINE NUMBER OF ROWS FROM FOLLOWING
EQUATION NUMBER OF ROWS=MAXIMUM
VALUE-MINIMUM VALUE+1

S27 — i=1

S28 — ADD |MINIMUM VALUE| TO ROW NUMBER OF BUMP Bi

S30

i=i+1?

NO    i>n?    S29

YES

END

FIG. 7

(1,1) (1,2) (1,3) (1,4) (1,5)

$\times$ $\times$ $\times$ $\times$ $\times$

(2,1) (2,3) (2,4) (2,5)

$\times$ $\times$ $\times$ $\times$

(3,1) (3,2) (3,3) (3,4) (3,5)

$\times$ $\times$ $\times$ $\times$ $\times$

## FIG. 8

100

101

## FIG. 9

START

SEARCH TWO BUMPS SITUATED IN TOP ROW, AND OBTAIN STRAIGHT LINE 100 THAT CONNECT THE TWO BUMPS — S30

SEARCH TWO BUMPS SITUATED IN LEFTMOST COLUMN, AND OBTAIN STRAIGHT LINE 101 THAT CONNECT THE TWO BUMPS — S31

OBTAIN INTERSECTING POINT A OF STRAIGHT LINES 100 AND 101 — S32

$i=0, \ j=0$ — S33

CALCULATE POSITION SEPARATED FROM INTERSECTING POINT A BY $j \times PX$ IN DIRECTION PARALLEL TO STRAIGHT LINE 100 AND BY $i \times PY$ IN DIRECTION PARALLEL TO STRAIGHT LINE 101, THEREBY SETTING IT AS BUMP POSITION $Aij$ IN DESIGN DATA — S34

$j=j+1$ — S35

S36
$j \geqq NX?$    NO

YES

$i=i+1$ — S37

S38
$i \geqq NY?$    NO    →    $j=0$    S39

YES

END

FIG. 10

FIG. 11

ROW-DIRECTIONAL PITCH SIZE

COLUMN-DIRECTIONAL
PITCH SIZE

## FIG. 12

FIRST COLUMN
SECOND COLUMN
THIRD COLUMN
FOURTH COLUMN
FIFTH COLUMN
SIXTH COLUMN
SEVENTH COLUMN
EIGHTH COLUMN

← FIRST ROW

← SECOND ROW

← THIRD ROW

← FOURTH ROW

← FIFTH ROW

← SIXTH ROW

## FIG. 13

FIG. 14

FIG. 15

EP 1 061 330 A1

| | | |
|---|---|---|
| FIRST DETECTING SECTION | FIRST DEFECT DETERMINING MEANS | FIRST TABLE CREATING SECTION |

54  55  56

RING ILLUMINATION  51

OBJECTIVE LENS  52

LASER SOURCE  53

INTEGRATED DETERMINATION MEANS  60

61

LIGHT SOURCE FOR RING ILLUMINATION  50

| | | |
|---|---|---|
| SECOND DETECTING SECTION | SECOND DEFECT DETERMINING MEANS | SECOND TABLE CREATING SECTION |

57  58  59

FIG. 16

FIG. 17

EP 1 061 330 A1

FIG.18

FIG.19

| THREE-DIMENSIONAL MEASUREMENT / TWO-DIMENSIONAL MEASUREMENT | A-1 | A-2 | A-3 | A-4 | A-5 |
|---|---|---|---|---|---|
| B-1 | CLASS 1 DEFECTIVE | CLASS 2 DEFECTIVE | CLASS 3 DEFECTIVE | CLASS 4 DEFECTIVE | CLASS 5 DEFECTIVE |
| B-2 | CLASS 6 DEFECTIVE | CLASS 7 DEFECTIVE | CLASS 8 NORMAL | CLASS 9 DEFECTIVE | CLASS 10 NORMAL |
| B-3 | CLASS 11 DEFECTIVE | CLASS 12 NORMAL | CLASS 13 NORMAL | CLASS 14 NORMAL | CLASS 15 NORMAL |

FIG.20

EP 1 061 330 A1

THREE-DIMENSIONAL MEASURING MEANS

**S51**

INPUT IMAGE DATA THROUGH THREE-DIMENSIONAL SHAPE INPUT MEANS

↓ S52

CLASSIFY EACH BUMP BY PARTICLE ANALYSIS USING HEIGHT DISTRIBUTION AND BRIGHTNESS DISTRIBUTION OF TO-BE-INSPECTED OBJECTS

↓ S53

ESTIMATE LATTICE FROM IMAGES OF MEASURED BUMPS

↓

RECORD POSITIONS OF CLASSIFIED BUMPS AS LATTICE POSITIONS

S54

TWO-DIMENSIONAL MEASURING MEANS

**S55**

INPUT IMAGE DATA THROUGH TWO-DIMENSIONAL SHAPE INPUT MEANS

↓

CLASSIFY BUMPS BY PARTICLE ANALYSIS USING TWO-DIMENSIONAL IMAGE DATA

S56

↓ S57

ESTIMATE LATTICE FROM IMAGES OF MEASURED BUMPS

↓

RECORD POSITIONS OF CLASSIFIED BUMPS AS LATTICE POSITIONS

S58

SYNTHETIC DETERMINATION MEANS

S59 —

EXECUTE FINAL GOOD/BAD DETERMINATION BY COMPARING CLASSIFICATION RESULTS OF BUMPS IN LATTICE POSITIONS BY THREE-DIMENSIONAL AND TWO-DIMENSIONAL MEASURING MEANS

↓

S60 —

OUTPUT GOOD/BAD DETERMINATION RESULTS

## FIG. 21

ROW–DIRECTIONAL PITCH 103

BUMP 100

REFERENCE LINE 101

COLUMN–DIRECTIONAL PITCH 102

FIG. 22

(0,0) (0,1) (0,2) (0,3) (0,4) (0,5) (0,6) (0,7) (0,8)

(1,0) (1,1) (1,2) (1,3) (1,4) (1,5) (1,6) (1,7) (1,8)

(2,0) (2,1) (2,2) (2,3) (2,4) (2,5) (2,6) (2,7) (2,8)

(3,0) (3,1) (3,2) (3,3) (3,4) (3,5) (3,6) (3,7) (3,8)

⋮

(n,0) (n,1) (n,2) (n,3) (n,4) (n,5) (n,6) (n,7) (n,8)

FIG. 24

THREE-DIMENSIONAL SHAPE MEASURING MEANS

S100 — REGISTER IRREGULAR/LACKING PORTION OF ARRANGEMENT BY TEACHING WHEN THE ARRANGEMENT IS COMPLICATED

S101
INPUT IMAGE DATA THROUGH THREE-DIMENSIONAL SHAPE INPUT MEANS

S102
CLASSIFY EACH BUMP BY PARTICLE ANALYSIS USING HEIGHT DISTRIBUTION AND BRIGHTNESS DISTRIBUTION OF TO-BE-INSPECTED OBJECTS

S103
CALCULATE ARRANGEMENT NUMBERS FROM IMAGES OF MEASURED BUMPS

MANAGE, AS ID INFORMATION, POSITIONS OF BUMPS CLASSIFIED BY PARTICLE ANALYSIS

S104

TWO-DIMENSIONAL SHAPE MEASURING MEANS

S105
INPUT IMAGE DATA THROUGH TWO-DIMENSIONAL SHAPE INPUT MEANS

CLASSIFY BUMPS BY PARTICLE ANALYSIS USING TWO-DIMENSIONAL IMAGE DATA

S106
S107
CALCULATE ARRANGEMENT NUMBERS FROM IMAGES OF MEASURED BUMPS

MANAGE, AS ID INFORMATION, POSITIONS OF BUMPS CLASSIFIED BY PARTICLE ANALYSIS

S108

SYNTHETIC DETERMINATION MEANS

S109 — EXECUTE FINAL GOOD/BAD DETERMINATION BY COMPARING CLASSIFICATION RESULTS OF BUMPS IN LATTICE POSITIONS BY THREE-DIMENSIONAL AND TWO-DIMENSIONAL MEASURING MEANS

S110 — GOOD/BAD DETERMINATION RESULTS

FIG. 23

# INTERNATIONAL SEARCH REPORT

| | International application No. |
|---|---|
| | PCT/JP99/06699 |

**A. CLASSIFICATION OF SUBJECT MATTER**

Int.Cl⁷   G01B11/00, G01N21/956,
          H05K3/34, G06T7/00

According to International Patent Classification (IPC) or to both national classification and IPC

**B. FIELDS SEARCHED**

Minimum documentation searched (classification system followed by classification symbols)

Int.Cl⁷   G01B11/00-11/30, 102,
          G01N21/84-21/958,
          G06T1/00-7/00, H05K3/32, 3/34

Documentation searched other than minimum documentation to the extent that such documents are included in the fields searched

Jitsuyo Shinan Koho          1922-1996    Toroku Jitsuyo Shinan Koho  1994-2000
Kokai Jitsuyo Shinan Koho    1971-2000    Jitsuyo Shinan Toroku Koho  1996-2000

Electronic data base consulted during the international search (name of data base and, where practicable, search terms used)

ECLA,WPI/L

**C. DOCUMENTS CONSIDERED TO BE RELEVANT**

| Category* | Citation of document, with indication, where appropriate, of the relevant passages | Relevant to claim No. |
|---|---|---|
| A | JP, 9-329422, A (Fujitsu Limited), 22 December, 1997 (22.12.97), Full text; all drawings   (Family: none) | 1-4 |
| A | JP, 7-311025, A (Komatsu Ltd.), 28 November, 1995 (28.11.95), Full text; all drawings   (Family: none) | 1-4 |
| A | JP, 10-283480, A (OMRON CORPORATION), 23 October, 1998 (23.10.98), Full text; all drawings   (Family: none) | 1-4 |
| A | JP, 8-159721, A (Fujitsu Limited), 21 June, 1996 (21.06.96), Full text; all drawings   (Family: none) | 1-4 |
| A | JP, 10-288505, A (Komatsu Ltd.), 27 October, 1998 (27.10.98), Full text; all drawings   (Family: none) | 5-9 |
| P,A | JP, 11-132737, A (Juki Corporation), 21 May, 1999 (21.05.99), | 5-9 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 February, 2000 (18.02.00) | 29 February, 2000 (29.02.00) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

International application No.

PCT/JP99/06699

| C (Continuation). DOCUMENTS CONSIDERED TO BE RELEVANT | | |
|---|---|---|
| Category* | Citation of document, with indication, where appropriate, of the relevant passages | Relevant to claim No. |
| | Full text; all drawings (Family: none) | |